# EUROPÄISCHE PATENTSCHRIFT

(11) **EP 1 984 161 B1**
(45) Veröffentlichungstag und Bekanntmachung des Hinweises auf die Patenterteilung: **14.10.2015**
(21) Anmeldenummer: 07704510.2
(22) Anmeldetag: 09.02.2007
(51) Int. Cl.: B29C 45/72, B29C 49/64, B29C 35/16, B29C 35/02

(54) **AUFNAHMESYSTEM**
RECEIVING SYSTEM
SYSTÈME DE RÉCEPTION

(30) Priorität: 18.02.2006 DE 102006007639
(43) Veröffentlichungstag der Anmeldung: 29.10.2008
(73) Patentinhaber: MHT Mold & Hotrunner Technology AG, 65239 Hochheim (DE)
(72) Erfinder: PÜST, Wolfgang, 65719 Hofheim-Wallau (DE); STEINMETZ, Rolf, Hofheim-Wildsac 65719 (DE)
(74) Vertreter: WSL Patentanwälte Partnerschaft mbB
(86) Internationale Anmeldenummer: PCT/EP2007/051297
(87) Internationale Veröffentlichungsnummer: WO 2007/093566

(56) Entgegenhaltungen:
- WO-A-99/50039
- WO-A-99/58313
- WO-A-2004/041510
- US-A- 5 232 715

## Beschreibung

Die vorliegende Erfindung betrifft ein Aufnahmesystem zur Nachbehandlung eines in einer Spritzgießform hergestellten Hohlkörperformlings sowie ein entsprechendes Verfahren.

Formlinge bzw. Vorformlinge aus Kunststoffen werden in großer Zahl in Spritzgießtechnik hergestellt. Besondere Bedeutung hat die Herstellung von Hohlkörperformlingen, sogenannten Preforms, aus PET als Grundlage für die Produktion von PET-Getränkeflaschen. Die Hohlkörperformlinge werden, nachdem der Spritzgießprozeß abgeschlossen ist, am gleichen oder einem anderen Ort durch Blasformen auf das gewünschte Endmaß aufgeblasen.

Für das Spritzgießen der Hohlkörperformlinge werden Spritzgießmaschinen mit Werkzeugen verwendet, die eine große Anzahl von Formnestern, zum Beispiel 48, aufweisen. Daher können z. Zt. während eines einzigen Spritzgießzyklus zeitlich parallel bis zu 192 Formlinge hergestellt werden. Da der Anzahl der Formnester aufgrund der begrenzten räumlichen Abmessungen der Schließeinheiten von Spritzgießmaschinen eine Grenze gesetzt ist, muß für eine Erhöhung der Anzahl der in einem Zeitintervall herstellbaren Formlinge, die Zykluszeit, d.h. die Zeit, die benötigt wird, um in einem Formnest einen Formling herzustellen, verkürzt werden. Dabei geht man dazu über, die Formlinge innerhalb des Spritzgießzyklus immer früher aus der Spritzgießform zu entnehmen, um die Form für die nächste Injektion verwenden zu können. Trotz der Kühlung der einzelnen Formnester sind zu früheren Entnahmezeitpunkten die Formlinge noch nicht so weit abgekühlt, daß sie ohne die Gefahr von Deformationen entnommen werden können. Zwar sind die Formlinge äußerlich soweit abgekühlt, daß sie eine stabile Außenkontur aufweisen, jedoch ist das Kunststoffmaterial im Inneren der Formlinge nach wie vor flüssig. Wird die Wärmeabfuhr von der Oberfläche der Formlinge weg unterbrochen, so verflüssigt sich auch das Kunststoffmaterial an der Oberfläche der Formlinge wieder aufgrund des Wärmetransports aus dem Inneren der Formlinge an die Oberfläche. Daher muß bei der Entnahme und in der unmittelbar daran anschließenden Phase dafür Sorge getragen werden, daß die Formlinge keinerlei Deformation erfahren und die Formlinge im Anschluß an die Entnahme aus den Formnester weiter gekühlt werden.

Die weitere Kühlung und damit die vollständige Aushärtung der Formlinge erfolgt dann außerhalb der eigentlichen Formnester und außerhalb der Schließeinheit, so daß diese für den nächsten Spritzgießvorgang zur Verfügung stehen.

Die aus dem Stand der Technik bekannten Werkzeuge für Vorformlinge zur Herstellung von Flaschen sind derart angeordnet, daß die Formnester vom geschlossenen Ende der Formlinge befüllt werden. Auf diese Weise liegt der Anguß der Flaschen zum einen in dem für den Endkunden nicht unmittelbar einsehbaren Bodenbereich der Flasche, zum anderen ist das gegenüberliegende Ende des Vorformlings, d.h. der Flaschenhals mit dem Gewinde, extrem kritisch in Bezug auf die Maßhaltigkeit, da nach dem Spritzgießen an diesem Ende keine weitere Nachbearbeitung erfolgt.

Die einzelnen Formnester für die Vorformlinge bestehen aus im allgemeinen mindestens drei Teilen: einer Kavität, welche die äußere Form für den Bauch des Vorformlings bildet, einer Halsbacke, welche zweistückig ausgeführt ist und im geschlossenen Zustand die Form für den Hals, d.h. in der Regel für das Gewinde sowie den Tragring und Dichtring der Flasche, bildet und einem Kern, welcher die innere Oberfläche des Formlings definiert.

Um den fertigen Hohlkörperformling aus dem Formnest zu entnehmen, wird üblicherweise der Formling samt Kern aus der Kavität abgezogen, wobei die Halsbacke geschlossen ist, so daß sie den Formling auf dem Kern hält. Nachfolgend wird eine Entnahmeplatte mit einer Entnahmehülse bzw. - kavität in den Bereich unter den Formling gebracht, wobei in einem weiteren Schritt die Halsbacke, d.h. die Form des Flaschenhalses, durch seitliches Auffahren der beiden Hälften geöffnet wird, so daß der Formling vom Kern der Form abrutschen kann und in die Entnahmekavität fällt bzw. mit Hilfe eines Druckluftimpulses in die Entnahmekavität hineinbewegt wird. Nachdem die Entnahmeplatte aus der Schließeinheit entfernt wurde, steht das Werkzeug für den nächsten Spritzgießvorgang zur Verfügung. Weist das Werkzeug mehrere Formnester auf, so ist in der Entnahmeplatte eine entsprechende Anzahl von Entnahmekavitäten vorgesehen.

Die vorangegangenen Beschreibung bezieht sich auf ein sogenanntes vertikales System, in welchem sich die Schließeinheit in vertikaler Richtung schließt. Daher erstrecken sich auch die Formnester im wesentlichen in vertikaler Richtung, so daß die Schwerkraft zum Abziehen der Formlinge von den Kernen genutzt werden kann. Alternativ dazu gibt es auch horizontale Systeme, deren Schließeinheiten in horizontaler Richtung schließen. Die Formnester erstrecken sich in diesem Fall ebenfalls im wesentlichen horizontal. Daher erfolgt in horizontalen Systemen das Abziehen der Formlinge vom Kern häufig mit Hilfe von zusätzlichen Kräften, z.B. durch Druckluft oder durch einen mechanischen Greifer.

In der Entnahmekavität findet eine Nachbehandlung des Formlings statt, d.h. er wird hier so lange abgekühlt, bis er seine vollständige Stabilität erreicht hat und eine glasartige, d.h. durchsichtige und klare, Struktur des Formlings gewährleistet werden kann.

Aus dem Stand der Technik, insbesondere der US 6,475,422 B1, sind ferner Entnahmesysteme bekannt, bei denen zusätzlich zur Kühlung der Entnahmekavität ein Kühlfinger in das Innere des Formlings eingeführt wird, welcher den Formling von seiner Innenseite her mit Hilfe eines Luftstroms kühlt: Dabei wird eine Berührung der Innenseite des Formlings vermieden, um keine weiteren Quellen für Deformationen zu schaffen.

Solche Entnahmesysteme sind auch bekannt aus der WO 99/50039, der WO 99/58313 sowie der WO 20041041510. Das Dokument WO 99/58313 offenbart ein System nach dem Oberbegriff des Anspruchs 1.

Bei den aus dem Stand der Technik bekannten Entnahmesystemen wird die Kühlleistung nur in begrenztem Maß auf die Formlinge übertragen, da aufgrund der Schwindung des PET-Materials beim Abkühlen nur ein mangelhafter Kontakt zwischen der Entnahmekavität und dem Formling vorhanden ist.

Darüber hinaus kann der Halsbereich des Hohlkörperformlings aufgrund von Hinterschneidungen durch das Gewinde und den Halsring nicht im thermischen Kontakt mit der Kavität gekühlt werden, sondern lediglich durch eine aufwendige Luftdusche, d.h. durch das Vorbeiführen eines Luftstroms an der Außenseite des Halses des Formlings.

Dem gegenüber liegt der vorliegenden Erfindung die Aufgabe zugrunde, ein Aufnahmesystem zur Nachbehandlung eines in einer Spritzgießform hergestellten Formlings bereitzustellen, welches die zuvor genannten Nachteile vermeidet und eine schnellere Abkühlung des Formlings, insbesondere aber des Halsbereichs des Formlings, ermöglicht.

Diese Aufgabe wird erfindungsgemäß durch ein System mit den Merkmalen von Anspruch 1 gelöst.

Auf diese Weise kann ein optimaler thermischer Kontakt zwischen dem Aufnahmefinger und der Innenwand des Formlings in allen Bereichen des Formlings erreicht werden.

Dabei ist es weiterhin vorgesehen, daß der Außendurchmesser des Aufnahmefingers im wesentlichen gleich dem Innendurchmesser des zu entnehmenden Formlings im abgekühlten Zustand ist. Auf diese Weise beeinflußt der Aufnahmefinger die Schwindung des Materials beim Abkühlen nur geringfügig, und der Formling läßt sich nach dem Abkühlen mit verhältnismäßig geringer Kraft vom Aufnahmefinger abnehmen.

Um die Entnahmekräfte beim Abnehmen des Formlings von dem Aufnahmefinger so gering wie möglich zu halten, ist es vorgesehen, dass der Außendurchmesser des Fingers en 0,1 mm bis 0,5 mm kleiner ist als der Innendurchmesser des zu entnehmenden Formlings im Entnahmezustand. Dabei wird als Entnahmezustand der Zustand bezeichnet, in welchem der Hohlkörperformling aus der Kavität entnommen und an das System zur Nachbehandlung übergeben wird. In diesem Zustand ist der Formling zumindest in seinem Inneren noch heiß und das Material schwindet beim Abkühlen.

Das erfindungsgemäße Aufnahmesystem ist vorzugsweise zur Aufnahme des Hohlkörperformlings außerhalb der Schließeinheit der Spritzgießmaschine eingerichtet, wobei der Hohlkörperformling von einer Entnahmeplatte an das Aufnahmesystem übergeben wird.

Alternativ dazu kann das Aufnahmesystem derart ausgestaltet sein, daß es als Entnahmeplatte für die Entnahme der Formlinge aus dem Werkzeug im Inneren der Schließeinheit eingerichtet ist. Diese Ausführungsform des Aufnahmesystems mit einem Aufnahmefinger ermöglicht es beim Entformen zunächst den Formling in der Kavität des Formnests zu belassen, wobei die Halsbacken geschlossen bleiben, während der Formkern aus dem Formling herausgezogen wird. Nachfolgend werden entweder die Halsbacken geöffnet, so daß der Formling aus der Formkavität auf den Aufnahmefinger fallen kann oder der Aufnahmefinger wird in den Formling eingeführt, die Halsbacken geöffnet und nachfolgend der Formling auf dem Aufnahmefinger aus der Kavität des Formnests entnommen. '

Aufgrund der Schwindung des Kunststoffmaterials beim Abkühlen des Formlings wird der Formling auf den Aufnahmefinger aufgeschrumpft, wodurch ein guter thermischer Kontakt zwischen dem Aufnahmefinger und der Innenwand des Formlings aufrechterhalten wird.

Dieser Kontakt ist insbesondere auch im Halsbereich des Formlings, d.h. in dem Bereich vorhanden, in dem der Halsring sowie das Gewinde der Flasche angeordnet sind. Auf diese Weise wird in dem erfindungsgemäßen Aufnahmesystem eine schnellere Abkühlung des Formlings auch und vor allem im Halsbereich des Formlings erreicht als in den Entnahmesystemen aus dem Stand der Technik. Auf eine zusätzliche Luftdusche im Halsbereich des Formlings kann je nach Ausführungsform der Erfindung verzichtet werden.

Zum Abkühlen des Formlings ist es vorteilhaft, wenn der Aufnahmefinger eine Kühleinrichtung aufweist. Darüber hinaus kann es jedoch zweckmäßig sein, wenn alternativ oder zusätzlich eine Einrichtung zum Heizen des Formlings vorgesehen ist. Auf diese Weise kann der Formling nach dem Erreichen seines formstabilen Zustands wieder erwärmt und dann dem nächsten Produktionsschritt, d.h. dem Blasformen, zugeführt werden.

Dabei ist es zweckmäßig, wenn die Erwärmung des Formlings vorzugsweise in definierten Abschnitten, beispielsweise dem Flaschenbauch, erfolgt, während andere Bereiche, beispielsweise der Flaschenhals, die sich während der weiteren Verarbeitung nicht mehr verformen dürfen, gekühlt werden. Wird bei diesem Prozeß der Formling vor dem erneuten Aufheizen unter eine bestimmte kritische Temperatur gekühlt, so zeigen die auf diese Weise hergestellten Flaschen eine erhöhte Stabilität.

Besonders bevorzugt ist eine Ausführungsform der Erfindung, bei der die Einrichtung zum Kühlen und/oder Heizen ein Durchflußkanal für ein Fluid ist, welcher mit einer Einrichtung zum Erzeugen eines Fluidstroms verbindbar ist. Ein solcher Durchflußkanal kann wahlweise mit einem aufgeheizten oder einem abgekühlten Fluid durchflossen werden, so daß dieser Kanal sowohl zum Heizen als auch zum Kühlen des Formlings verwendbar ist. Alternativ oder zusätzlich kann die Einrichtung zum Heizen eine Elektroheizung und/oder eine Infrarotbeleuchtung sein, welche in den Aufnahmefinger integriert sind. Auch ist es möglich, den Finger mit Hilfe einer Piezokühlung zu kühlen.

Um zusätzlich eine Kühlung des Formlings von seiner Außenseite her zu erreichen, ist es vorteilhaft, wenn das Aufnahmesystem zusätzlich zu dem Aufnahmefinger eine Nachbehandlungshülse aufweist, welche relativ zu dem Aufnahmestift so bewegbar ist, daß sie den Aufnahmefinger sowie den darauf angeordneten Hohlkörperformling umschließt. Dabei ist es zweckmäßig, wenn die Nachbearbeitungshülse als Kavität ausgebildet ist, deren innere Wandung in etwa der äußeren Form des Hohlkörperformlings entspricht.

Der Aufnahmefinger weist eine Halteeinrichtung für den Formling auf.

In der einfachsten Ausgestaltung weist eine solche Halteeinrichtung mindestens eine Öffnung in dem Aufnahmefinger auf, welche mit einer Vakuumeinrichtung verbindbar ist. So kann der Formling von dem Aufnahmefinger angesaugt und gehalten werden.

Um Deformationen des Formlings zu vermeiden, ist es insbesondere zweckmäßig, wenn das System darüber hinaus eine Abstandseinrichtung aufweist, die derart ausgebildet ist, daß der Großteil der Innenfläche des Formlings nicht mit der Außenfläche des Aufnahmefinger in Kontakt tritt.

Besonders bevorzugt ist daher eine Ausführungsform, bei der die Abstandseinrichtung mindestens eine Öffnung in dem Aufnahmefinger umfaßt, welche mit einer Fluidzufuhr verbindbar ist. Mit Hilfe eines kontinuierlichen Fluidstroms wird der Formling auf einem Luftpolster in einem definierten Abstand zu dem Aufnahmefinger gehalten. Diese berührungslose Halterung des Formlings auf dem Aufnahmefinger minimiert die Deformationen, welche der Formling während des Entnehmens aus der Formkavität und/oder während des Abkühlprozesses erfährt. Dabei ist es zweckmäßig, wenn die Abstandseinrichtung zwischen der Innenfläche des Formlings und der Außenfläche des Aufnahmefingers einen Abstand von etwa 0,5 mm und bis etwa 10 mm vorzugsweise von 1 mm bis 5 mm gewährleistet.

Wird die Abstandseinrichtung durch eine Öffnung in dem Aufnahmefinger gebildet, welche mit einer Fluidzufuhr verbindbar ist, so ist es zweckmäßig, wenn das Aufnahmesystem eine Einrichtung zum Heizen und/oder Kühlen des Fluidstroms aufweist. So kann das Abkühlen oder Aufheizen des Formlings unmittelbar durch den zur Halterung des Formlings verwendeten Fluidstroms dienen.

Wird beim Kühlen oder Erwärmen des Hohlkörperformlings mit Hilfe eines Fluidstroms gleichzeitig der Aufnahmefinger, beispielsweise mit einer Elektroheizung oder -kühlung, gekühlt oder erwärmt, so wird eine homogene Temperierung des Formlings erreicht, da der Fluidstrom, der an dem Aufnahmefinger vorbeiströmt, trotz Wärmeaufnahme oder -abgabe durch den Hohlkörperformling auf einer in etwa konstanten Temperatur gehalten wird.

Bevorzugt ist eine Ausführungsform der Erfindung, bei der die mindestens eine Öffnung, welche mit einer Vakuumeinrichtung (als Halteeinrichtung) und/oder einer Fluidzufuhr (als Abstandseinrichtung) verbindbar ist, in der Nähe des ersten Endes des Fingers angeordnet ist.

Insbesondere ist aber eine Ausführungsform der Erfindung bevorzugt, bei welcher der Aufnahmefinger zumindest abschnittsweise aus einem porösen Material besteht, das die mindestens eine Öffnung bildet. Auf diese Weise bildet sich beim Ausströmen eines Fluids durch das poröse Material ein Luftkissen, auf welchem der Formling gehalten ist.

Besonders bevorzugt ist eine Ausführungsform der Erfindung, bei welcher der Aufnahmefinger einen Anschlag für den Hohlkörperformling aufweist, so daß sich das offene Ende des Hohlkörperformlings auf diesem abstützt. Auf diese Weise wird verhindert, daß sich der Hohlkörperformling aufgrund der auf ihn einwirkenden Gravitation auf dem Aufnahmefinger über ein gewolltes Maß hinaus dehnt.

In einer bevorzugten Ausführungsform ist der Anschlag einstellbar. Dadurch kann eingestellt werden, wie weit der Aufnahmefinger in den Hohlkörperformling eindringt. Dies ist insbesondere bei der Ausführungsform von Vorteil, bei der vorgesehen ist, daß der Hohlkörperformling nach dem Abkühlen möglichst flächig mit dem Aufnahmefinger in Kontakt tritt. Stellt sich nämlich während des Betriebes heraus, daß die Hohlkörperformlinge nach ihrem Abkühlen zu fest auf dem Aufnahmefinger sitzen und daher nur schwer entfernt werden können, kann der Anschlag derart verstellt werden, daß der Aufnahmefinger nicht mehr so weit in den Hohlkörperformling eintaucht. Wird nun die Außenkontur des Aufnahmefingers oder die Innenkontur des Hohlkörperformlings leicht konisch ausgebildet, so führt dies dazu, daß durch die Verstellung des Anschlages der Abstand zwischen "heißem" Hohlkörperformling und Aufnähmefinger eingestellt werden kann. Um so weiter der Aufnahmefinger in den Hohlkörperformling eintaucht, um so besser ist aufgrund des direkten Kontaktes zwischen Aufnahmefinger und "kaltem" Hohlkörperformling die Kühlung; jedoch sitzt dann der Hohlkörperformling auch um so fester auf dem Aufnahmefinger auf. Es ist daher ein Kompromiß zwischen guter Kühlleistung einerseits und guter Abnehmbarkeit des Hohlkörperformlings von dem Aufnahmefinger andererseits einzustellen.

Besonders zweckmäßig ist es, wenn der Anschlag als Stützring oder Platte ausgeführt ist, welche den Aufnahmefinger in der Nähe des zweiten Endes des Aufnahmefingers ringförmig umfassen. Auf diese Weise kann sich das offene Ende des Hohlkörperformlings vollumfänglich abstützen.

Der Aufnahmefinger weist eine Auswurfeinrichtung auf, die es ermöglicht, den abgekühlten Hohlkörperformling von dem Aufnahmefinger abzustreifen.

Eine solche Auswurfeinrichtung wird durch eine Öffnung in dem Aufnahmefinger gebildet, die mit einem Fluidstrom beaufschlagbar ist, so daß der Hohlkörperformling durch einen Fluidimpuls von dem Aufnahmefinger abgestreift werden kann.

Zusätzlich kann die Auswurfeinrichtung eine Einrichtung aufweisen, welche den Aufnahmefinger in der Nähe seines unteren Endes umgreift und die axial entlang des Fingers bewegbar ist. Bei dieser Bewegung wird der Mündungsbereich des Hohlkörperformlings oder der Randbereich des Halsringes erfaßt und der Formling abgestreift.

Dabei ist es vorteilhaft, wenn die Auswurfeinrichtung aus dem Stützring oder der Platte des Anschlags gebildet wird.

Weitere Vorteile, Merkmale und Anwendungsmöglichkeiten der vorliegenden Erfindung werden anhand der folgenden Beschreibung einer bevorzugten Ausführungsform und der dazugehörigen Figuren deutlich.
- Figur 1: zeigt schematisch eine bevorzugte Ausführungsform des erfindungsgemäßen Aufnahmesystems,
- Figur 2: zeigt eine axiale Querschnittsansicht durch eine bevorzugte Ausführungsform des erfindungsgemäßen Aufnahmefingers.
- Figur 3: zeigt eine radiale Schnittansicht durch den Aufnahmefinger aus Figur 2.
- Figur 4: zeigt eine alternative Ausführungsform des Aufnahmesystems während des Auswerfens eines Satzes von Hohlkörperformlingen von den Kernen und während der Entnahme von Hohlkörperformlingen aus dem Werkzeug.
- Figur 5: zeigt das Aufnahmesystem aus Figur 4 während der Übergabe der Hohlkörperformlinge an die Stifte zur Nachbehandlung.
- Figur 6: zeigt eine weitere Ausführungsform des Aufnahmesystems.
- Figur 7: zeigt eine weitere alternative Ausführungsform des Aufnahmesystems.
- Figur 8: zeigt eine Ansicht des Aufnahmesystems aus Figur 7 bei geöffneter Schließeinheit.
- Figur 9: zeigt eine weitere Ansicht des Aufhahmesystems aus den Figuren 7 und 8 während eines anderen Arbeitsschritts.

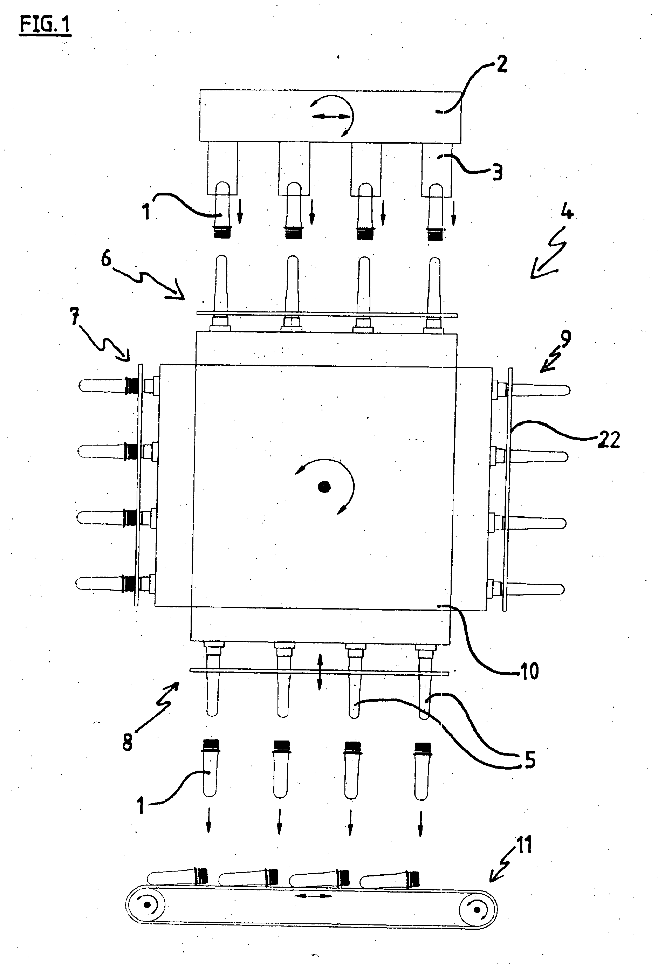

Figur 1 zeigt schematisch das erfindungsgemäße Aufnahmesystem zur Nachbehandlung mehrerer in einer Spritzgießform hergestellter Hohlkörperformlinge, wobei die Beschreibung der Figur insbesondere die Funktionen des Aufnahmesystems innerhalb des Herstellungsprozesses darstellt.

In der dargestellten Ausführungsform werden die in einer Spritzgießform einer Spritzgießmaschine hergestellten Hohlkörperformlinge 1 mit Hilfe einer Entnahmeplatte 2 aus den Formnestern der Spritzgießform entnommen. Die Hohlkörperformlinge 1 sind so genannte Vorformlinge oder Preforms für die Herstellung von PET-Flaschen. Die Preforms 1 werden mit Hilfe von Entnahmekavitäten 3 der Entnahmeplatte 2 aus den Formnestern der Spritzgießform entnommen. Dazu kann die Entnahmeplatte 2 in die Schließeinheit der Spritzgießmaschine hineinbewegt werden. Außerhalb der Spritzgießmaschine werden die Preforms 1 von der Entnahmeplatte 2 an das erfindungsgemäße Aufnahmesystem 4 übergeben. Dazu weist das Aufnahmesystem 4 Aufnahmefinger 5 auf, welche als Kern in das Innere der Preforms 1 eingreifen und die Preforms 1 halten. Die dargestellte Ausführungsform des Aufnahmesystems 4 weist vier Sätze 6 bis 9 von Aufnahmefingern 5 auf, welche auf einem drehbar gelagerten Würfel 10 angeordnet sind.

In der dargestellten Ausführungsform ist je ein Satz von Aufnahmefingern 6 bis 9 auf einer der Seitenflächen des Würfels 10 angeordnet. In der willkürlich gewählten Ausgangsposition des Aufnahmesystems 4 befindet sich der Aufnahmefingersatz 6 in der Übergabeposition, in welcher die Aufnahmefinger 5 die Preforms 1 von der Entnahmeplatte 2 aufnehmen. Dazu wird wahlweise das Aufnahmesystem 4 oder die Entnahmeplatte 2 so bewegt, daß die Aufnahmefinger in das Innere der Preforms 1 hineinragen, diese festhalten und aus den Entnahmekavitäten 3 durch entsprechendes Verfahren des Aufnahmesystems 4 oder der Entnahmeplatte 2 herausnehmen.

In einem darauffolgenden Arbeitsschritt wird der Würfel 10 des Entnahmesystems 4 derart gedreht, daß der nächste freie Satz 9 von Aufnahmefingern 5 in die Aufnahmeposition gedreht wird, während der mit Preforms 1 bestückte Satz 6 nun in die Position des Satzes 7 der Darstellung in Figur 1 gedreht wird. In dieser Position können die von den Aufnahmefingern 5 des Satzes 6 aufgenommenen Preforms 1 abkühlen. Ist die erforderliche Abkühlung erreicht, so werden die Preforms in der Abstreifposition, in der sich in Figur 1 der Satz 8 der Aufnahmefinger 5 befindet, gedreht. Hier werden die Preforms 1 von den Aufnahmefingern 5 abgestreift und können zur weiteren Verarbeitung, beispielsweise mit einem Förderband 11, abtransportiert werden.

Alternativ ist es möglich, den Würfel 10 derart zu drehen, daß die Verweildauer der Hohlkörperformlinge 1 auf den Fingern 5 verlängert wird. Dazu ist es erforderlich, daß jeder Preform während seiner Verweildauer auf einem Finger 5 zunächst in die Position des Satzes 7 und dann in die Position des Satzes 9 aus Figur 1 gebracht wird: Dazu sind zusätzliche Drehbewegungen des Würfels um 180° bzw. 270° erforderlich.

Die dargestellte schematische Ansicht zeigt ein Aufnahmesystem mit vier Sätzen von jeweils 16 Aufnahmefingern 5, die in einer 4 x 12 Matrix auf den Seitenflächen des Würfels 10 des Aufnahmesystems 4 angeordnet sind. Andere Anordnungen der Aufnahmefinger sind möglich, wobei die Anzahl und Anordnung der Finger der Anzahl und Anordnung der Entnahmekavitäten der Entnahmeplatte entspricht.

Der besseren Übersicht halber sind in den nachfolgend beschriebene Figuren Elemente, die mit Elementen der Figur 1 identisch oder diesen ähnlich sind, mit gleichen bzw. gestrichenen Bezugszeichen bezeichnet.

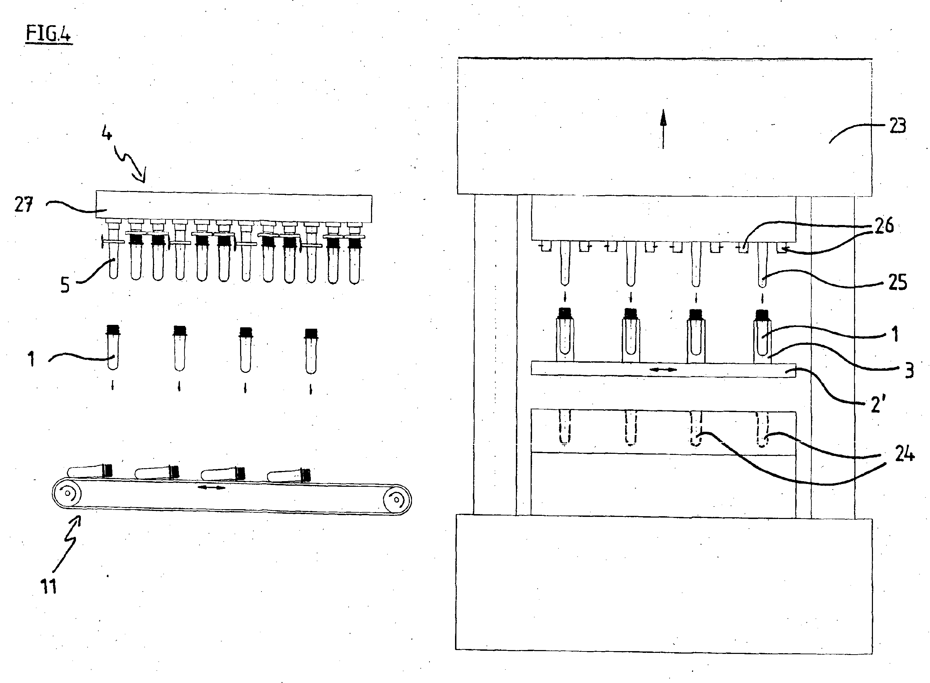

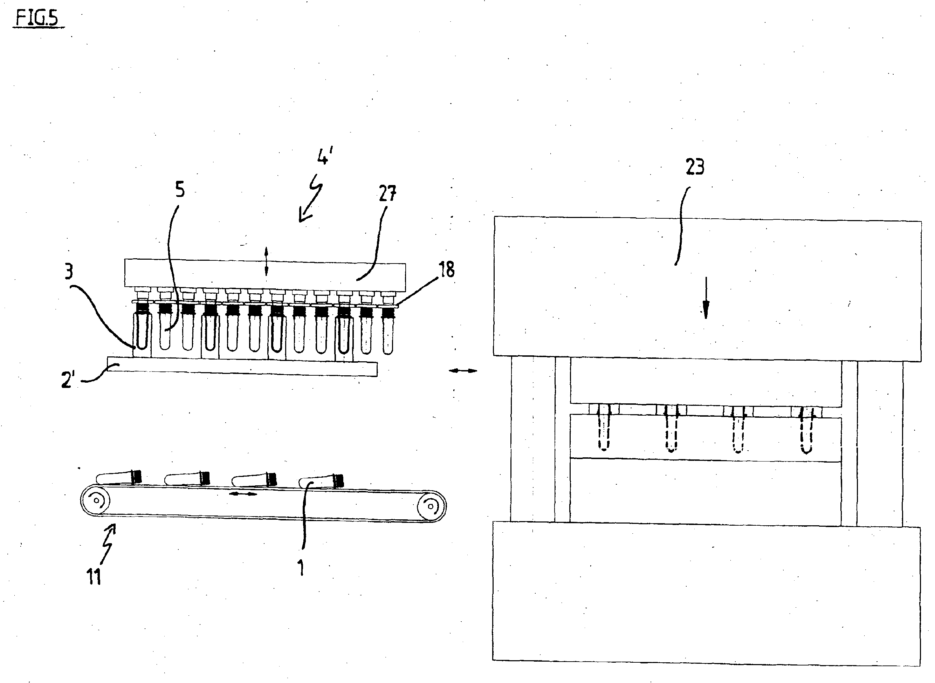

In den Figuren 4 und 5 ist eine alternative Ausführungsform des erfindungsgemäßen Aufnahmesystems 4' zur Nachbehandlung der Formlinge 1 dargestellt. Die Darstellungen in Figuren 4 und 5 zeigen neben dem Aufnahmesystem 4' auch die Schließeinheit 23 der Spritzgießmaschine sowie die Entnahmeplatte 2' des Systems.

In Figur 4 ist die vertikale Schließeinheit 23 der Spritzgießmaschine im aufgefahrenen Zustand dargestellt. Dazu wurden zunächst die Kavitäten 24 der Formnester einerseits und die Kerne 25 sowie die Halsbacken 26 andererseits hydraulisch voneinander getrennt. Um die nach dem Auffahren der Form von den Halsbacken 26 auf den Kernen 25 gehaltenen Formlinge 1 entnehmen zu können, wurde die Entnahmeplatte 2' in die Schließeinheit 23 eingebracht, so daß die Aufnahmekavitäten 3 der Entnahmeplatte 2' unterhalb der Kerne 25 der Form angeordnet sind. Durch Auseinanderziehen der Halsbacken 26 werden die Formlinge freigegeben und sie werden durch die Schwerkraft von den Kernen entformt und in den Aufnahmekavitäten 3 der Entnahmeplatte 2' aufgenommen. Alternativ kann das Entformen von den Kernen auch pneumatisch, mit Hilfe einer Abstreifplatte oder mittels eines mit der Entnahmeplatte verbundenen Greifers erfolgen.

Die in Abbildung 4 ebenfalls dargestellte dreistufige Nachkühlplatte weist Kühlfinger 5 auf, die in einem Abstand voneinander angeordnet sind, welcher gleich einem Drittel des Abstandes zwischen den Aufnahmekavitäten 3 der Entnahmeplatte 2' beträgt. Auf diese Weise wird bei der Übergabe der Formlinge von der Entnahmeplatte 2' an die Finger 5 der Nachkühlplatte 27 nur jeder dritte Finger 5 bestückt. Dieser Übergabevorgang von der Entnahmeplatte 2' an die Finger 5 des Aufnahmesystems ist in Figur 5 dargestellt. Dabei weist jeder Finger 5 einen gesondert ansteuerbaren Abstreifring 18 auf, so daß die Formlinge 1 auf den Fingern 5 selektiv ausgeworfen werden können. Auf diese Weise läßt sich das Aufnahmesystem 4' dreistufig betreiben, wobei während ein erster Satz von Formlingen 1 abgekühlt wird, auf der gleichen Platte 27 ein zweiter Satz von Formlingen aufgenommen wird, während kurz danach ein dritter, bereits abgekühlter Satz von Formlingen 1 auf ein Förderband 11 ausgeworfen wird.

Neben der Übergabe der Formlinge 1 von der Entnahmeplatte 2' an die Finger 5 der Nachkühlplatte 27 ist in Figur 5 die Schließeinheit 23 wieder im geschlossenen Zustand dargestellt, so daß im Werkzeug bereits der Spritzgießvorgang für den nächsten Satz von Formlingen 1 abläuft.

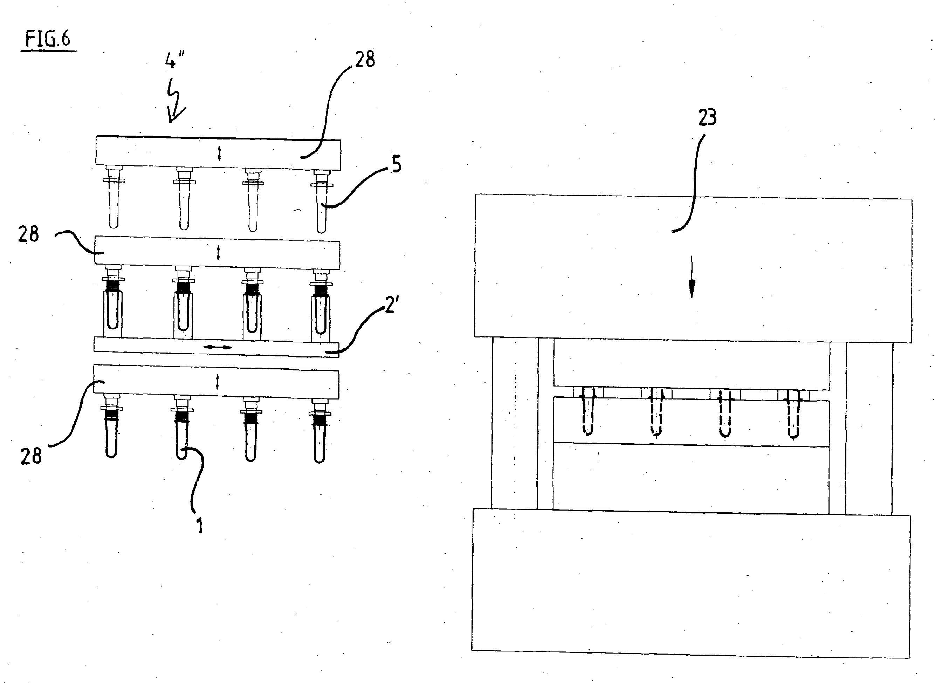

In der Figur 6 ist eine weitere Ausführungsform des erfindungsgemäßen Aufnahmesystems 4" zum Abkühlen der Formlinge 1 zusammen mit der Schließeinheit 23 dargestellt. Das Aufnahmesystem besteht aus mehreren, in der dargestellten Ausführungsform aus drei Nachkühlplatten 28, welche nacheinander mit Hilfe der Entnahmeplatte 2' mit Hohlkörperformlingen bestückt werden. Dabei sind die Nachkühlplatten 28 in einer Regalanordnung vorgesehen, die es ermöglicht, daß immer ein Satz von Formlingen 1 abgekühlt wird, während ein Satz von Formlingen 1 von der Entnahmeplatte übergegeben wird, während ein weiterer Satz von Formlingen 1 ausgeworfen wird.

In der Figur ist ein sogenanntes Horizontalsystem dargestellt, bei dem sich die Formwerkzeughälften in horizontaler Richtung öffnen. Prinzipiell könnte aber auch ein Vertikalsystem verwendet werden.

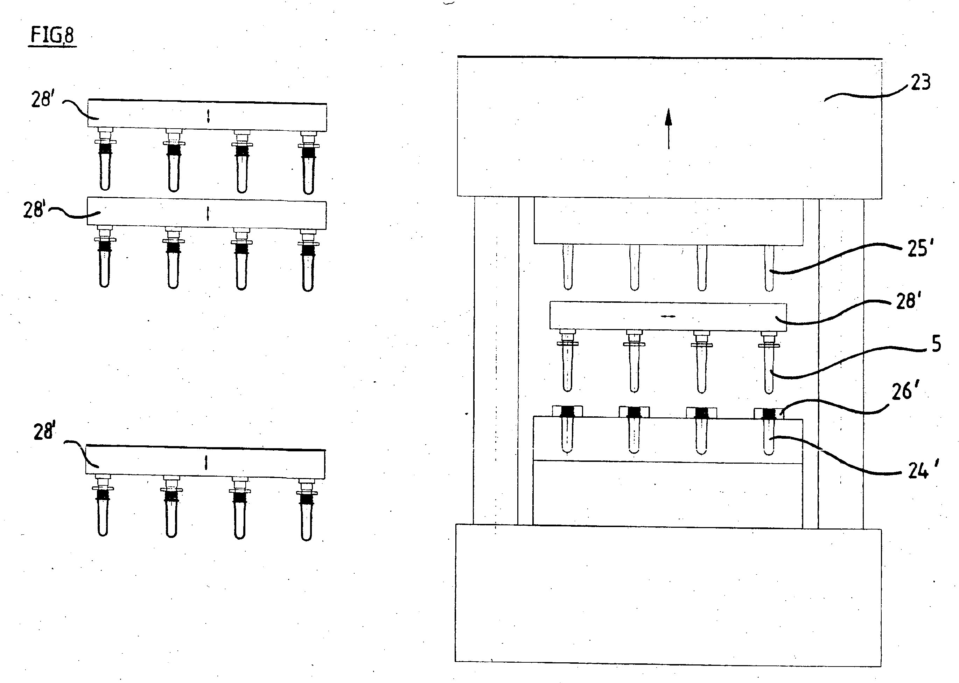

Während alle bisher dargestellten Ausführungsformen des Aufnahmesystems 4, 4', 4" eine Entnahmeplatte 2, 2' vorsehen, um die Formlinge 1 aus dem Werkzeug in der Schließeinheit 3 zu entnehmen und auf die Aufnahmefinger zu übergeben, weist die in den Figuren 8 bis 9 dargestellte, alternative Ausführungsform keine solche Entnahmeplatte auf. Die Funktion der Entnahmeplatte wird von den Nachkühlplatten 28' mitübernommen. Zu diesem Zweck sind die Nachkühlplatten 28' als in die Schließeinheit bewegbar und übernehmen dort direkt die Formlinge 1 aus den Kavitäten 24' der Form.

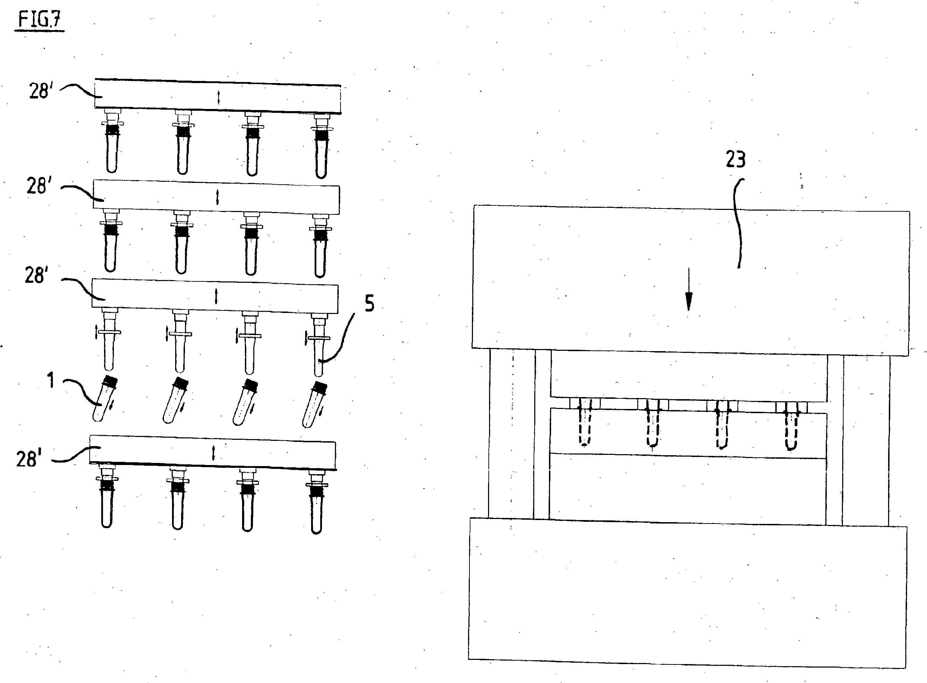

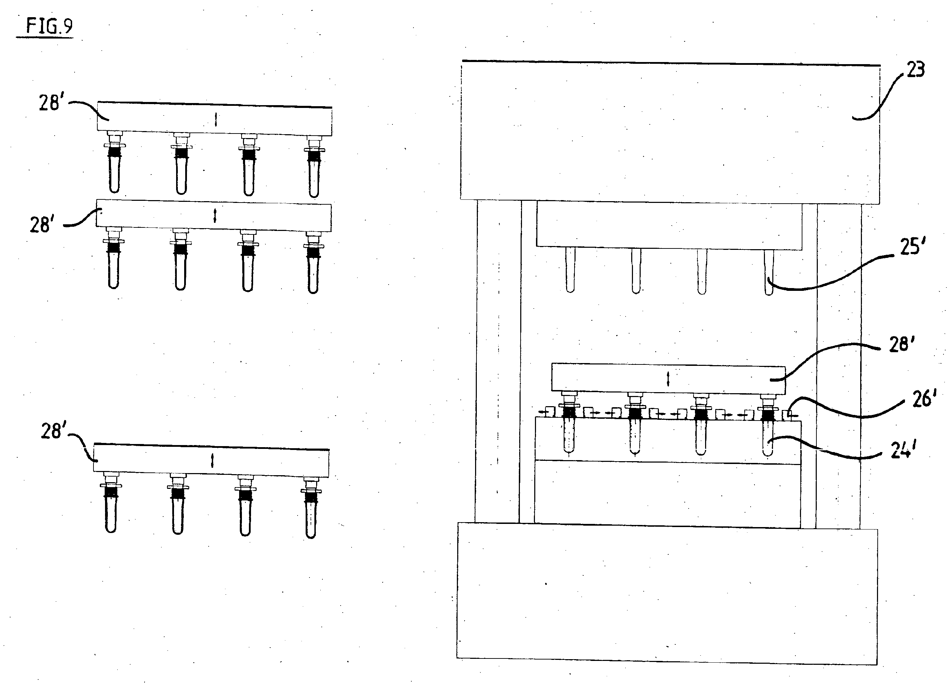

Während in Figur 7 die Schließeinheit 23 der Spritzgießvorrichtung noch geschlossen dargestellt ist und von einer der Nachkühlplatte 28' gerade Formlinge 1 ausgeworfen werden, zeigt Figur 8 die Schließeinheit 23 in geöffnetem Zustand. Dabei wurde eine der Nachkühlplatten 28' in die Schließeinheit hineinbewegt. Aus dieser Figur wird deutlich, daß wenn daran festgehalten werden soll, die Formnester von ihrem geschlossenen Ende her zu befüllen, diese Art der Entnahme eine Abkehr von den bisherigen Prinzipien des Formaufbaus erfordert. Nach dem Auffahren der Schließeinheit 23 verbleiben die geschlossenen Halsbacken 26' bei den Kavitäten 24' der Formnester, so daß auch die Formlinge 1 in den Kavitäten 24' verbleiben, während die Kerne 25' aus den Formlingen 1 herausgezogen werden. Nach dem Auseinanderziehen der Halsbacken 26' können die Formlinge, 1 von der Nachkühlplatte 28' aufgenommen werden. Dazu werden, wie in Figur 9 dargestellt, die Finger 5 der Platte 28' in die in den Kavitäten 24' der Form steckenden Hohlkörperformlinge 1 eingeführt. Nach dem Eintauchen der Finger 5 in die Innenräume der Finger 1 werden die Formlinge beispielsweise mit Hilfe eines Vakuums von den Fingern 5 gegriffen, aus den Kavitäten 24' entnommen und außerhalb der Schließeinheit 23 auf den gleichen Fingern 5 gekühlt.

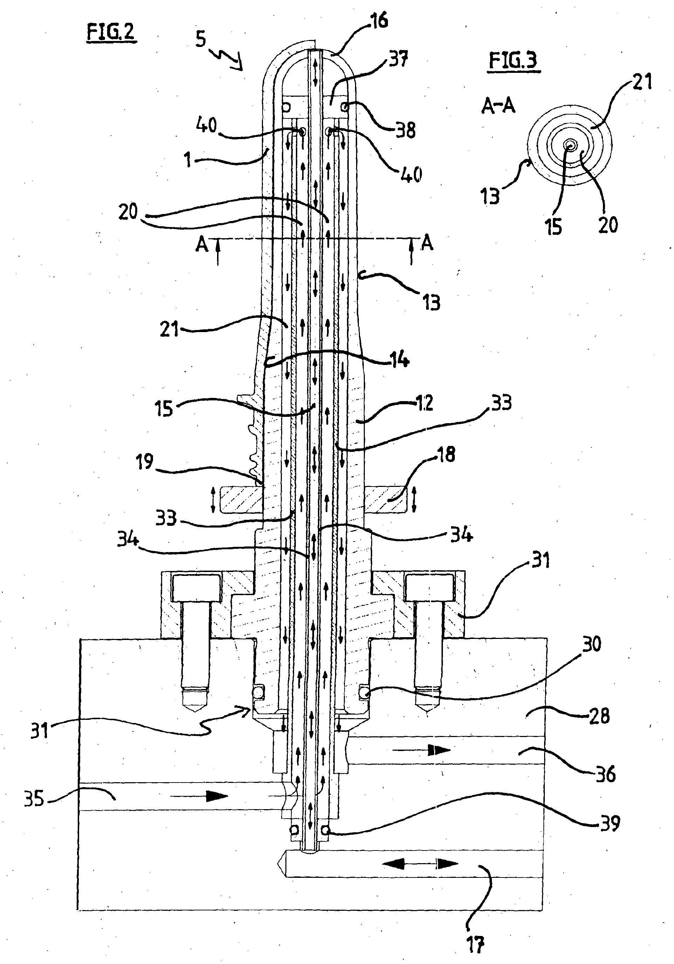

Für ein detaillierteres Verständnis des Aufbaus der Aufnahmefinger 5 sowie deren Funktionsweise werden nun die Figuren 2 und 3 beschrieben.

Figur 2 zeigt eine seitliche Schnittansicht eines Aufnahmefingers 5, sowie beispielhaft dessen Befestigung an einer Nachkühlplatte 28 des Aufnahmesystems 4. Ein identischer Finger kann auch für alle anderen Ausführungsformen von Nachkühlplatten oder Würfeln verwendet werden. Der Kern 12 des Aufnahmefingers 5 hat eine Außenfläche 13, die im wesentlichen der Form der inneren Oberfläche 14 der Preforms 1 entspricht.

Um den Preform 1 auf dem Kern 12 des Aufnahmefingers 5 zu halten, ist in der dargestellten Ausführungsform ein Vakuumsystem vorgesehen. Über den im Inneren des Kerns 12 vorgesehenen Kanal 15, welcher im Bereich der Spitze 16 des Kerns 12 eine Öffnung in der äußeren Oberfläche 13 des Kerns 12 aufweist, wird ein Unterdruck angelegt. Dieser Unterdruck saugt den Boden des Preforms 1 an, so daß der Preform auf dem Kern 12 gehalten wird. Dieser Unterdruck kann in der Übergabeposition des Satzes 6 der Aufnahmefinger 5 aus Figur 1 auch dazu verwendet werden, die Preforms aus der Entnahmeplatte 2 herauszunehmen. Der Kanal 15 ist über einen Anschluß 17 wahlweise mit einer Vakuumeinrichtung zum Erzeugen eines Unterdrucks, wie zuvor beschrieben, oder mit einer Überdruckeinrichtung verbindbar. Zum Abstreifen des Preforms 1 von dem Kern 12 in der Position des Satzes 8 aus Figur 1 wird der Kanal 15 mit einem leichten Überdruck beaufschlagt, so daß der Preform 1 von dem Kern 12 abgestoßen wird.

Um größere Abziehkräfte zwischen dem Preform 1 und dem Kern 12 überwinden zu können, ist ein bewegbarer Stützring 18 vorgesehen, welcher den Kern 12 des Fingers 5 umgreift und auf dem sich der Hals 19 der Preform 1 abstützt. Der Stützring 18 kann entlang des Kernes 12 des Fingers 5 bewegt werden, so daß in Abstreifrichtung eine Kraft auf den Hals 19 des Preforms 1 ausgeübt wird.

Der Stützring 18 dient darüber hinaus auch als Anschlag für den Rand des Flaschenhalses. Mit Hilfe des Stützrings wird festgelegt, wie weit der Kern 12 des Fingers in den Formling 1 eingreift. Da sowohl die innere Oberfläche des Preforms 14 als auch die äußere Oberfläche 15 des Fingers konische Körper definieren, bestimmt die Eindringtiefe des Kerns 12 in den Formling 1 maßgeblich die Entnahmekräfte, welche nach dem Abkühlen und daher nach der Schrumpfung des Formlings 1 erforderlich sind, um den Formling 1 von dem Kern 12 des Fingers abzuwerfen.

Der in Figur 2 dargestellte Kern 12 weist eine Wasserdurchflußkühlung auf, wobei um den Vakuum- bzw. Druckluftkanal 15 im Zentrum des Kerns 12 herum konzentrisch ein Zu- und Ablauf 20, 21 vorgesehen ist. Die radiale Anordnung der Kanäle 15, 20, 21 ist deutlich in einer horizontalen Schnittansicht des Aufnahmefingers 5 in Figur 3 zu sehen.

Der Umfang der Außenfläche 13 ist in der dargestellten Ausführungsform an allen Stellen Entlang der Längsachse des Kerns 12 um etwa 0,1 mm kleiner als der Innendurchmesser des Preforms 1 im heißen Zustand, in dem der Preform 1 aus dem Formnest des Werkzeugs entnommen und an den Kühlfinger übergeben wird. Auf diese Weise sind auch nach der Schwindung des Materials der Preform 1 beim Abkühlen die Abstreifkräfte zwischen der inneren Oberfläche 14 des Preforms und der Außenfläche 13 des Kerns 12 so gering, daß der Preform 1 mit Hilfe der Druckluft durch den Kanal 15 und dem Abstreifring 18 von dem Finger entfernt werden kann.

Der in Figur 2 schematisch dargestellte Stützring 18 kann, wenn dies zweckmäßig ist, wie in Figur 1 dargestellt, durch eine Abstreifplatte, welche Bohrungen im Bereich der einzelnen Finger 5 aufweist, ersetzt sein. Durch eine einzige Bewegung der Platte können auf diese Weise alle Preforms auf den Fingern 5 eines Satzes von Fingern auf einmal abgestreift werden.

Der Kern 12 des Aufnahmefingers 5 besteht in der dargestellten Ausführungsform aus einem einstückigen Hohlkörper. Der Hohlkörper ist in eine Ausnehmung 31 der Nachkühlplatte 28 eingesteckt und mit Hilfe eines Klemmrings 31, der mit der Nachkühlplatte 28 verschraubt ist, an der Nachkühlplatte befestigt. Dabei ist der Hohlkörper mit Hilfe eines O-Rings 30 gegen die Nachkühlplatte 28 gedichtet, so daß das Kühlfluid nicht aus der Nachkühlplatte 28 oder dem Finger 5 austreten kann. Die Kanäle 15, 20, 21 im Inneren des Kerns 12 werden von konzentrisch angeordneten Röhren 33, 34 gebildet. Dabei ist die radial äußere Röhre 33 derart angeordnet, daß ihre Außenwand einen Abstand zu dem Kern 12 aufweist, so daß der Rücklaufkanal 21 für das Kühlfluid gebildet wird. Die radial innere Röhre hat wiederum einen Abstand von der radial äußeren Röhre 33, so daß der Zulaufkanal 20 für das Kühlfluid gebildet wird. Die plattenseitigen Enden der Röhren 33, 34 sind derart in die Nachkühlplatte 28 eingepaßt, daß der Zulaufkanal 20 und der Rücklaufkanal 21 mit dem Einlaßkanal 35 bzw. dem Auslaßkanal 36 der Nachkühlplatte in Verbindung stehen. Die Röhren 33, 34 sind an ihren im Bereich der Spitze 16 des Kerns 12 liegenden Enden mit einer Zentrierplatte 37 verlötet. Die Zentrierplatte 37 ist mit Hilfe eines O-Rings 38 gegen den Kern 12 gedichtet. Die radial außenliegende Röhre 33 endet an der Zentrierplatte 37, wobei sie in diesem Bereich Durchbrechungsbohrungen 40 aufweist, die über ihren Umfang verteilt Verbindungen zwischen dem Zulaufkanal 15 und dem Rücklaufkanal 21 herstellen.

Die radial innenliegende Röhre 34 greift sowohl durch die Zentrierplatte 37 als auch durch die Spitze 16 des Kerns 12 hindurch, so daß sie eine Verbindung des Kanals 15 mit der Außenfläche 13 des Kerns 12 bildet. Dabei ist das Ende der Röhre 34 mit der Spitze 16 verlötet. Das plattenseitige Ende der Röhre greift in den Druckluft- bzw. Vakuumkanalanschluß 17 der Nachkühlplatte 28 ein. Dabei ist das Ende der Röhre 34 mit Hilfe eines O-Rings 39 gegen die Nachkühlplatte 28 gedichtet, so daß das Kühlfluid nicht in den Kanal 15 eindringen kann.

In dem Rücklaufkanal 21 können Verwirbelungseinrichtungen vorgesehen sein, die für eine turbulente Strömung innerhalb des Rücklaufkanals 21 sorgen, um eine bessere Kühlleistung zur Verfügung zu stellen. Die Verwirbelungseinrichtungen können beispielsweise Rippen sein. Alternativ ist es auch möglich die Wände des Rücklaufkanals mit einer Struktur zu versehen: Im einfachsten Fall kann die Oberfläche aufgerauht sein.

### Bezugszeichenlist

- 1: Formling/Preform
- 2, 2': Entnahmeplatte
- 3: Aufnahmekavität
- 4, 4', 4": Aufnahmesystem
- 5: Aufnahmefinger
- 6: Satz von Aufnahmefingern
- 7: Satz von Aufnahmefingern
- 8: Satz von Aufnahmefingern
- 9: Satz von Aufnahmefingern
- 10: Würfel
- 11: Förderband
- 12: Kern des Aufnahmefingers
- 13: Außenfläche des Kerns
- 14: innere Oberfläche des Preforms
- 15: Kanal
- 16: Spitze des Kerns 12
- 17: Kanalanschluß
- 18: Stützring
- 19: Hals des Preforms
- 20, 21: Kanäle
- 22: Abstreifplatte
- 23: Schließeinheit
- 24, 24': Kavität
- 25, 25': Kern
- 26, 26': Halsbacke
- 27: dreistufige Nachkühlplatte
- 28, 28': Nachkühlplatte
- 30: O-Ring
- 31: Ausnehmung
- 32: Klemmring
- 33, 34: Röhre
- 35: Einlaßkanal
- 36: Auslaßkanal
- 37: Zentrierplatte
- 38: O-Ring
- 39: O-Ring

## Patentansprüche

1. System bestehend aus einer Spritzgießform zur Herstellung von Hohlkörpervorformlingen, wobei die Spritzgießform einen Kern, welcher die innere Oberfläche des Hohlkörpervorformlings definiert, aufweist, und einem Nachbehandlungssystem (4) zur Nachbehandlung eines in der Spritzgießform hergestellten Hohlkörpervorformlings (1), wobei das System einen Aufnahmefinger (5) mit einem ersten Ende und einem zweiten Ende aufweist und wobei der Aufnahmefinger (5) so ausgestaltet ist, daß er in den Hohlkörpervorformling (1) eingreifen kann, wobei die äußere Form des Aufnahmefingers (5) im wesentlichen der inneren Form des Hohlkörpervorformlings (1) entspricht, so daß der Aufnahmefinger (5) den Hohlkörpervorformling halten kann, wobei der Außendurchmesser des Aufnahmefingers (5) im wesentlichen gleich dem Innendurchmesser des Hohlkörpervorformlings (1) im abgekühlten Zustand ist, so daß der Hohlkörpervorformling (1) sich auch nach der Schwindung von dem Aufnahmefinger (5) abnehmen lässt, **dadurch gekennzeichnet, dass** die Spritzgießform und der Aufnahmefinger derart angepasst sind, dass der Außendurchmesser des Aufnahmefingers (5) zwischen 0,1 mm bis 0,5 mm kleiner als der Innendurchmesser des Hohlkörpervorformlings im Entnahmezustand ist, so daß der Hohlkörpervorformling (1) sich auch nach der Schwindung von dem Aufnahmefinger (5) abnehmen läßt, wobei der Aufnahmefinger eine Halteeinrichtung (15, 18) zum Halten des Hohlkörpervorformlings (1) aufweist, die mindestens eine Öffnung in dem Aufnahmefinger (5) umfaßt, welche mit einer Vakuumeinrichtung verbindbar ist, der Aufnahmefinger (5) eine Auswurfeinrichtung (18, 22) aufweist, die es ermöglicht, den abgekühlten Hohlkörpervorformling (1) von dem Aufnahmefinger abzustreifen, wobei die Auswurfeinrichtung mindestens eine Öffnung in dem Aufnahmefinger aufweist, die mit einem Fluidstrom beaufschlagbar ist, so daß der Hohlkörpervorformling von dem Aufnahmefinger abgestreift wird.

2. System (4) nach Anspruch 1, **dadurch gekennzeichnet, daß** das Nachbehandlungssystem eine Einrichtung zum Kühlen und/öder Heizen des Hohlkörpervorformlings (1) aufweist, so daß der Hohlkörpervorformling (1) mit Hilfe des Systems wahlweise abgekühlt oder erwärmt werden kann, wobei vorzugsweise die Einrichtung zum Kühlen und/oder Heizen des Hohlkörpervorformlings (1) eine Einrichtung zum Erzeugen eines gekühlten oder geheizten Fluidstroms aufweist und besonders bevorzugt die Einrichtung zum Kühlen und/oder Heizen einen in dem Aufnahmefinger (5) angeordneten Durchflußkanal (20, 21) für ein Fluid aufweist, welcher mit der Einrichtung zum Erzeugen eines gekühlten oder geheizten Fluidstroms verbindbar ist, oder die Einrichtung zum Heizen eine Elektroheizung aufweist.

3. System (4) nach einem der Ansprüche 1 bis 2, **dadurch gekennzeichnet, daß** der Aufnahmefinger (5) eine Abstandseinrichtung aufweist, welche so ausgestaltet ist, daß sie den Hohlkörpervorformling so hält daß der Großteil der Innenfläche des Formlings nicht mit der Außenfläche des Aufnahmefingers in Kontakt tritt, wobei vorzugsweise die Abstandseinrichtung mindestens eine Öffnung in dem Aufnahmefinger (5) umfaßt, welche mit einer Fluidzufuhr verbindbar ist, wobei besonders bevorzugt die mindestens eine Öffnung in der Nähe des ersten Endes des Aufnahmefingers (5) angeordnet ist und/oder der Aufnahmefinger zumindest abschnittsweise aus porösem Material besteht, das die mindestens eine Öffnung bildet.

4. System (4) nach einem der Ansprüche 1 bis 3, **dadurch gekennzeichnet, daß** der Aufnahmefinger (5) einen Anschlag für einen Hohlkörpervorformling (1) aufweist, so daß sich das offene Ende des Hohlkörpervorformlings (1) auf diesem abstützen kann, wobei vorzugsweise der Anschlag durch einen Ring (18) oder eine Platte (22) gebildet wird, welche den Aufnahmefinger (5) in der Nähe seines zweiten Endes umgreift, so daß sich das offene Ende des Hohlkörpervorformlings (1) vollumfänglich auf diesem abstützt.

5. System (4) nach einem der Ansprüche 1 bis 4, **dadurch gekennzeichnet, daß** eine Nachbehandlungshülse vorgesehen ist, welche relativ zu dem Aufnahmestift so bewegbar ist, daß sie den Aufnahmefinger sowie den darauf angeordneten Hohlkörpervorformling umschließt, wobei vorzugsweise die Nachbehandlungshülse als Kavität ausgebildet ist, deren innere Wandung in etwa der äußeren Form des Hohlkörpervorformlings (1) entspricht und/oder die Nachbehandlungshülse so ausgestaltet ist, daß sie den Hohlkörpervorformling (1) nicht berührt.

6. System (4) nach einem der Ansprüche 1 bis 5, **dadurch gekennzeichnet, daß** das Nachbehandlungssystem zur Aufnahme des Hohlkörpervorformlings (1) außerhalb der Schließeinheit der Spritzgießmaschine eingerichtet ist, wobei es so ausgestaltet ist, daß es den Hohlkörpervorformling (1) von einer Entnahmeplatte (2) übernimmt oder daß es als Entnahmeplatte für die Entnahme des Hohlkörpervorformlings (1) aus einem Spritzgießwerkzeug im Inneren der Schließeinheit einer Spritzgießmaschine eingerichtet ist.

7. System (4) nach einem der Ansprüche 1 bis 6, **dadurch gekennzeichnet, daß** mindestens eine Anordnung (6, 7, 8, 9) von Aufnahmefingern (5) vorgesehen ist, wobei die Anzahl von Aufnahmefingem in der Anordnung (6, 7, 8, 9) der Anzahl von gleichzeitig in der Spritzgießvorrichtung hergestellten Hohlkörpervorformlingen oder einem ganzzahligen Vielfachen davon entspricht, so daß alle gleichzeitig in einer Spritzgießvorrichtung hergestellte Hohlkörpervorformlinge (1) von der Anordnung (6, 7, 8, 9) aufgenommen werden können, wobei vorzugsweise mehrere, vorzugsweise vier, Anordnungen (6, 7, 8, 9) von Aufnahmefingem (5) vorgesehen sind, welche auf einer drehbaren Halteeinrichtung angeordnet sind, so daß das System durch Drehen der Halteeinrichtung nacheinander mehrere Sätze von gleichzeitig hergestellten Hohlkörpervorformlingen (1) auf den Aufnahmefingem der verschiedenen Anordnungen aufnehmen kann.

## Claims

1. System consisting of an injection molding mold for producing hollow body moldings, wherein the injection molding mold comprises a core, which defines the inner surface of the hollow body molding, and a post-treatment system (4) for the post-treatment of a hollow body molding (1) produced in the injection molding mold, wherein the system has a receiving finger (5) with a first end and a second end and wherein the receiving finger (5) is so designed that it can engage into the hollow body molding (1), wherein the outside shape of the receiving finger (5) substantially corresponds to the inside shape of the hollow body molding (1) so that the receiving finger (5) can hold the hollow body molding, wherein the outside diameter of the receiving finger (5) is substantially equal to the inside diameter of the hollow body molding (1) in the cooled condition so that the hollow body molding (1) can be removed from the receiving finger (5) even after shrinkage, **characterised in that** the injection molding mold and the receiving finger are adapted in such a way that the outside diameter of the receiving finger (5) is between 0.1 mm and 0.5 mm smaller than the inside diameter of the hollow body molding (1) in the removal condition so that the hollow body molding (1) can be removed from the receiving finger (5) even after shrinkage, wherein the receiving finger has a holding means (15, 18) for holding the hollow body molding (1), which has at least one opening in the receiving finger (5), which can be connected to a vacuum means, wherein the receiving finger (5) has an ejection means (18, 22) which makes it possible for the cooled hollow body molding (1) to be stripped from the receiving finger, wherein the ejection means has at least one opening in the receiving finger, which can be acted upon with a fluid flow so that the hollow body molding can be stripped from the receiving finger.

2. A system (4) as set forth in claim 1 **characterised in that** the post-treatment system comprises a means for cooling and/or heating the hollow body molding (1) so that the hollow body molding (1) can be selectively cooled or heated by means of the system, wherein preferably the means for cooling and/or heating the hollow body molding (1) has a means for producing a cooled or heated fluid flow and particularly preferably the means for cooling and/or heating has a through-flow passage (20, 21) for a fluid, which is arranged in the receiving finger (5) and which can be connected to the means for producing a cooled or heated fluid flow, or the heating means has an electrical heating means.

3. A system (4) as set forth in one of claims 1 through 2 **characterised in that** the receiving finger (5) has a spacing means which is so adapted that it so holds the hollow body molding that the large part of the inside surface of the molding does not come into contact with the outside surface of the receiving finger, wherein preferably the spacing means includes at least one opening in the receiving finger (5), which can be connected to a fluid feed, wherein particularly preferably the at least one opening is arranged in the proximity of the first end of the receiving finger (5) and/or the receiving finger at least portion-wise comprises a porous material which has the at least one opening.

4. A system (4) as set forth in one of claims 1 through 3 **characterised in that** the receiving finger (5) has an abutment for a hollow body molding (1) so that the open end of the hollow body molding (1) can be supported thereon, wherein preferably the abutment is formed by a ring (18) or a plate (22) which embraces the receiving finger (5) in the proximity of its second end so that the open end of the hollow body molding (1) is supported thereon over its entire periphery.

5. A system (4) as set forth in one of claims 1 through 4 **characterised in that** there is provided a post-treatment sleeve which is movable relative to the receiving pin so that it embraces the receiving finger and the hollow body molding arranged thereon, wherein preferably the post-treatment sleeve is in the form of a cavity, the inside wall of which approximately corresponds to the outside shape of the hollow body molding (1) and/or the post-treatment sleeve is of such a configuration that it does not touch the hollow body molding (1).

6. A system (4) as set forth in one of claims 1 through 5 **characterised in that** the post-treatment system is adapted to receive the hollow body molding (1) outside the closure unit of the injection molding machine, wherein the system (4) is so adapted that it takes over the hollow body molding (1) from a removal plate (2) or that it is designed as a removal plate for removal of the hollow body molding (1) from an injection molding tool in the interior of the closure unit of an injection molding machine.

7. A system (4) as set forth in one of claims 1 through 6 **characterised in that** there is provided at least one arrangement (6, 7, 8, 9) of receiving fingers (5), wherein the number of receiving fingers in the arrangement (6, 7, 8, 9) corresponds to the number of hollow body moldings simultaneously produced in the injection molding apparatus or an integral multiple thereof, so that all hollow body moldings (1) simultaneously produced in an injection molding apparatus are received by the arrangement (6, 7, 8, 9), wherein preferably a plurality of and preferably four arrangements (6, 7, 8, 9) of receiving fingers (5) arranged on a rotatable holding means are provided so that the system can successively receive a plurality of sets of simultaneously produced hollow body moldings (1) on the receiving fingers of the various arrangements by rotation of the holding means.

## Revendications

1. Système constitué d'un moule à injection pour la fabrication d'ébauches de corps creux, le moule à injection comprenant un noyau, qui définit la surface interne de l'ébauche de corps creux, et d'un système de post-traitement (4) pour le post-traitement d'une ébauche de corps creux (1) fabriquée dans le moule à injection, le système comprenant un taquet de logement (5) avec une première extrémité et une deuxième extrémité et le taquet de logement (5) étant conçu de façon à ce qu'il puisse s'emboîter dans l'ébauche de corps creux (1), la forme extérieure du taquet de logement (5) correspondant globalement à la forme intérieure de l'ébauche de corps creux (1) de façon à ce que le taquet de logement (5) puisse maintenir l'ébauche de corps creux, le diamètre extérieur du taquet de logement (5) étant substantiellement égal au diamètre intérieur de l'ébauche de corps creux (1) à l'état refroidi, de façon à ce que l'ébauche de corps creux (1) puisse être retirée du taquet de logement (5) après le retrait, **caractérisé en ce que** le moule à injection et le taquet de logement sont adaptés de façon à ce que le diamètre extérieur du taquet de logement (5) soit inférieur de 0,1 mm à 0,5 mm au diamètre intérieur de l'ébauche du corps creux dans l'état d'extraction, de façon à ce que l'ébauche de corps creux (1) puisse également être retirée du taquet de logement (5) après le retrait, le taquet de logement comprenant un dispositif de maintien (15, 18) pour le maintien de l'ébauche de corps creux (1), le dispositif de maintien (15, 18) comprenant au moins une ouverture dans le taquet de logement (5), qui peut être reliée à un dispositif de mise sous vide, le taquet de logement (5) comprenant un dispositif d'éjection (18, 22) permettant de démouler l'ébauche de corps creux (1) refroidie du taquet de logement, le dispositif d'éjection comprenant au moins une ouverture dans le taquet de logement, qui peut être traversée par un courant de fluide, de façon à ce que l'ébauche de corps creux soit démoulée du taquet de logement.

2. Système (4) selon la revendication 1, **caractérisé en ce que** le système de post-traitement comprend un dispositif de refroidissement et/ou de chauffage de l'ébauche de corps creux (1), de façon à ce que l'ébauche de corps creux (1) puisse être refroidie ou chauffée, au choix, à l'aide du système, le dispositif de refroidissement et/ou de chauffage de l'ébauche de corps creux comprenant de préférence un dispositif de production d'un courant de fluide refroidi ou chauffé et, de préférence, que le dispositif de refroidissement et/ou de chauffage comprend un canal de circulation (20, 21) pour un fluide, disposé dans le taquet de logement (5), qui peut être relié au dispositif de production d'un courant de fluide refroidi ou chauffé, ou **en ce que** le dispositif de chauffage comprend un chauffage électrique.

3. Système (4) selon l'une des revendications 1 à 2, **caractérisé en ce que** le taquet de logement (5) comprend un dispositif d'écartement conformé de telle sorte qu'il maintienne l'ébauche de corps creux de façon à ce que la majeure partie de la surface interne de l'ébauche n'entre pas en contact avec la surface externe du taquet de logement, le dispositif d'écartement comprenant de préférence au moins une ouverture dans le taquet de logement (5), qui peut être reliée à une alimentation de fluide, l'au moins une ouverture étant de préférence disposée à proximité de la première extrémité du taquet de logement (5) et/ou le taquet de logement étant constitué, au moins partiellement, d'un matériau poreux qui forme l'au moins une ouverture.

4. Système (4) selon l'une des revendications 1 à 3, **caractérisé en ce que** le taquet de logement (5) comprend une butée pour une ébauche de corps creux (1), de façon à ce que l'extrémité ouverte de l'ébauche de corps creux (1) puisse s'appuyer sur celle-ci, la butée étant constituée de préférence d'une bague (18) ou d'une plaque (22) qui entoure le taquet de logement (5) à proximité de sa deuxième extrémité, de façon à ce que l'extrémité ouverte de l'ébauche de corps creux (1) s'appuie sur celle-ci sur toute sa circonférence.

5. Système (4) selon l'une des revendications 1 à 4, **caractérisé en ce qu'**une douille de post-traitement est prévue, qui est mobile par rapport au taquet de logement, de façon à ce qu'elle entoure le taquet de logement ainsi que l'ébauche de corps creux disposée dessus, la douille de post-traitement étant conçue de préférence comme une cavité dont la paroi interne correspond approximativement à la forme externe de l'ébauche de corps creux (1) et/ou la douille de post-traitement étant équipée de façon à ce qu'elle ne touche pas l'ébauche de corps creux (1).

6. Système (4) selon l'une des revendications 1 à 5, **caractérisé en ce que** le système de post-traitement est conçu pour le logement de l'ébauche de corps creux (1) à l'extérieur de l'unité de fermeture de la machine de moulage par injection, le système étant conçu de façon à prendre l'ébauche de corps creux (1) d'une plaque de retrait (2) ou étant conçu comme une plaque de retrait pour le retrait de l'ébauche de corps creux (1) d'un outil de moulage par injection à l'intérieur de l'unité de fermeture d'une machine de moulage par injection.

7. Système (4) selon l'une des revendications 1 à 6, **caractérisé en ce qu'**au moins un ensemble (6, 7, 8, 9) de taquets de logement (5) est prévu, le nombre de taquets de logement de l'ensemble (6, 7, 8, 9) correspondant au nombre d'ébauches de corps creux fabriquées simultanément dans un dispositif de moulage par injection ou à un multiple entier de celui-ci, de façon à ce que toutes les ébauches de corps creux (1) fabriquées simultanément dans un dispositif de moulage par injection, puissent être logées par l'ensemble (6, 7, 8, 9),, de préférence **en ce que** plusieurs, de préférence quatre ensembles (6, 7, 8, 9) de taquets de logement (5) sont prévus, qui sont disposés sur un dispositif de maintien rotatif, de façon à ce que le système puisse loger, par rotation du dispositif de maintien, plusieurs ensembles successifs d'ébauches de corps creux (1) fabriquées simultanément sur les taquets de logement des différents ensembles.
